(19) Europäisches Patentamt / European Patent Office / Office européen des brevets

(11) **EP 1 842 957 A1**

(12) **EUROPEAN PATENT APPLICATION**
published in accordance with Art. 158(3) EPC

(43) Date of publication:
**10.10.2007 Bulletin 2007/41**

(51) Int Cl.:
**D06M 11/72** (2006.01)   **D04H 1/54** (2006.01)
**D06M 11/73** (2006.01)   **D06M 15/41** (2006.01)

(21) Application number: **05822857.8**

(22) Date of filing: **27.12.2005**

(86) International application number:
**PCT/JP2005/023941**

(87) International publication number:
**WO 2006/073097 (13.07.2006 Gazette 2006/28)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.01.2005 JP 2005002321**
**20.04.2005 JP 2005122065**

(71) Applicant: **NAGOYA OILCHEMICAL CO., LTD.**
**Tokai-shi, Aichi 4760001 (JP)**

(72) Inventors:
• **OGAWA, Masanori c/o NAGOYA OILCHEMICAL CO., LTD.**
**Tokai-shi, Aichi 4760001 (JP)**

• **HIRANO, Morimichi c/o NAGOYA OILCHEMICAL CO., LTD.**
**Tokai-shi, Aichi 4760001 (JP)**
• **WATANABE, Tsuyoshi c/o NAGOYA OILCHEMICAL CO., LTD**
**Tokai-shi, Aichi 4760001 (JP)**

(74) Representative: **Vossius & Partner**
**Siebertstrasse 4**
**81675 München (DE)**

(54) **FLAME-RETARDANT FIBER SHEET AND FORMED ARTICLE THEREOF**

(57)   The object of the present invention is to provide a fiber sheet or a molded fiber sheet having excellent flame retardancy

A flame retardant fiber sheet containing a polyammonium phosphate with average degree of polymerization in the range of between 10 and 40 is provided in the present invention.

The polyammonium phosphate is insoluble or sparingly soluble in water so that said polyammonium phosphate gives the fiber sheet excellent flame retardancy with water resistance and durability, and is also inexpensive.

The molded fiber sheet is highly flame retardant and harmless, so that the molded fiber sheet is useful for automobile and building interiors.

Fig. 1

EP 1 842 957 A1

**Description**

FIELD OF THE INVENTION

The present invention relates to a flame retardant fiber sheet and a molded fiber sheet thereof, used for car or building interiors, and the like.

BACKGROUND OF THE INVENTION

Hitherto, needled nonwoven fabric, or needled felt, which is made by needle punching intertwining fibers, resin nonwoven fabric, or resin felt, which is made by binding fibers with synthetic resin, or fiber knit fabric, and the like, have been provided.

In said fiber sheet, flame retardant as well as sound proof and heat insulation properties are necessary.

Hitherto, to give said fiber sheet a flame retardacy, a phosphate group flame retardant having a low toxicity has been employed.

Patent Literatures;

Patent Literature 1: JP2002-348766
Patent Literature 2: JP Heisei10-226952
Patent Literature 3: JP Heisei 10-168756

THE PROBLEMS TO BE SOLVED BY THE INVENTION

Said phosphate group flame retardant is, however, water soluble, so that when moisture contacts said fiber sheet, said phosphate group flame retardant dissolves out from said fiber sheet, and durable flame retardancy of said flame sheet can not be guaranteed. To give said phosphate group flame retardant water resistance, a phosphate group flame retardant powder surface covered with a synthetic resin film, has been provided, but said flame retardant is very expensive due to the coating treatment.

MEANS TO SOLVE SAID PROBLEMS

To solve said problems the present invention provides a flame-retardant fiber sheet containing a polyammonium phosphate whose average degree of polymerization is in the range of between 10 and 40, and a flame-retardant fiber sheet containing a polyammonium phosphate, having an average degree of polymerization in the range of between 10 and 40, and an expandable graphite. Further, fibers preferably having a low melting point of below 180°C are mixed into said fibers.

To mold said fiber sheet, the fibers in said fiber sheet are preferably bonded with a synthetic resin binder and/or intertwined with each other by needling. In this case said synthetic resin binder is preferably a powder or water solution, and in a case where said synthetic resin binder is a water solution, said polyammonium phosphate having an average degree of polymerization in the range between 10 and 40 or said polyammonium phosphate and said expandable graphite is(are) preferably dispersed in said water solution, and said water solution in which said polyammonium phosphate or said polyammonium phosphate and graphite is(are) dispersed is preferably impregnated into said fiber sheet, or coated on to said fiber sheet. Further a water soluble resin is preferably dissolved in said water solution. Furthermore, it is preferable that said synthetic resin binder be a phenol group resin and that said phenol group resin be preferably sulfomethylated and/or sulfimethylated.

Still further, the present invention provides a molded laminated sheet made by molding said laminated sheet into a prescribed shape.

It is preferable that the resistance of said molded laminated sheet be in the range of between 0.1 and 100kPa · s/m.

[ACTION]

Said polyammonium phosphate having an average degree of polymerization in the range of between 10 and 40 is almost insoluble in water, so that even moisture comes into contact with said fiber sheet containing said polyammonium phosphate, said polyammonium phosphate in said fiber sheet will not dissolve out in the moisture from said fiver sheet.

In a case where said fiber sheet contains expandable graphite together with said polyammonium phosphate, said expandable graphite contained in said fiber sheet expands when said fiber sheet is exposed to a high temperature along with said polyammonium phosphate, giving said fiber sheet additional self fire extinguishing property. In said fiber sheet, the fibers are generally bonded and/or intertwined with each other by a synthetic resin binder and/or needling.

Further, in a case where said fibers, having a low melting point of below 180°C, are contained in said fibers, or where said fibers are bound with a synthetic resin binder, said fiber sheet becomes moldable.

Generally, said synthetic resin binder is a powder or water solution and in a case where said synthetic resin binder is water solution, said polyammonium phosphate or said polyammonium phosphate and said graphite is(are) dispersed in said water solution and said water solution in which said polyammonium phosphate or said polyammonium phosphate and said graphite is(are) dispersed is impregnated or coated in(on) said fiber sheet.

In the case where a water soluble resin is dissolved in said water solution, said water solution is thickened by said water soluble resin to protect sedimentation of said polyammonium phosphate and said graphite and further said polyammonium phosphate, and said graphite are strongly bonded to the fibers in said fiber sheet by said water soluble resin.

Further, said water soluble synthetic resin also acts as a release agent, so that the resulting molded fiber sheet is easily released from its mold.

EFFECT OF THE INVENTION

Said fiber sheet provided by the present invention has flame retardancy having a high moisture resistance and a high durability, is harmless to humans and animals and furthermore can be provided inexpensively.

BRIEF DESCRIPTION OF THE DRAWINGS

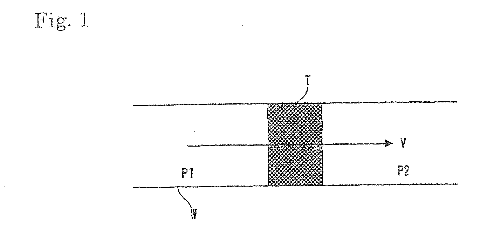

Fig. 1 is a side view to illustrate the principle of the measurement of ventilation resistance.

DETAILED DESCRIPTION OF THE PREFERRED EMBODIMENT

[Fiber]

The fiber used in the present invention includes synthetic fibers such as polyethylene fiber, polyacrylonitrele fiber, polyvinyl alcohol fiber, prolypropylene fiber, polyester fiber, polyamide fiber, acrylic fiber, urethane fiber, polyvinylchloride fiber, polyvinylidene chloride fiber, acetate fiber, or the like, natural fibers such as wool, mohair, cashmere, camel hair, alpaca, vicuna, angora, silk, raw cotton, cattail fiber, pulp, cotton, coconut fiber hemp fiber, bamboo fiber, kenaf fiber, or the like, biodegradable fiber made from lactic acid produced from such as corn starch, or the like, cellulose group synthetic fibers such as rayon fiber, staple fiber, polynosic fiber, cuprammonium rayon fiber, acetate fiber, triacetate fiber, or the like, inorganic fibers such as glass fiber, carbon fiber, ceramic fiber, asbestos fiber, or the like, and reclaimed fibers obtained by the fiberizing of a fiber product made of said fibers. Said fiber is used singly, or two or more kinds of said fiber may be used in combination in the present invention. Further, hollow fiber is preferable.

Said hollow fiber is made of polyester, such as polyethylent telephthalate, polybutylene telephthalate, polyhexamethylene telephthalate, poly 1.4-dimethylcyclohexane telephthalate, or the like, poliamide such as nylon 6, nylon 66, nylon 46, nylon 10, and the like, polyolefine such as polyethylene, polypropylene, or the like, thermoplastic resin such as an acrylic resin, polyurethane, polyvinylchloride, polyvinylidene chloride, acetate, or the like. Said hollow fiber is used singly, or two or more kinds of said fiber may be used in combination.

Said hollow fiber is made by the well known method such as the melt spinning method, and a method wherein two kinds of thermoplastic resin are melt spun together to produce a combined fiber, after which one of said two kinds of thermoplastic resin is selectively removed by dissolving it from said combined fiber.

One or more tuberous hollow part(s), with cross section(s) that is/are circular, elliptical, or the like is (are) formed in said hollow fiber, the ratio of hollow part(s) in said hollow fiber commonly being 5% to 70%, but preferably 10% to 50%. Said ratio of hollow part(s) indicates the rate of the cross section area of tuberous hollow part(s) to the cross section area of said fiber. Further, the fineness of said hollow fiber is in the range of between 1dtex and 50dtex, but preferably between 2dtex and 20dtex.

In a case where said hollow fibers are mixed in with common fibers, said hollow fibers are preferably mixed in with common fibers in an amount of more than 30% by mass.

When said hollow fibers are used in said fiber sheet, the rigidity of said fiber sheet is improved by the tube effect of said hollow fibers.

Further, in the present invention, fiber having a low melting point of below 180°C may be used. Said low melting point fibers include, for example, polyolefine group fibers such as polyethylene fiber, polypropylene fiber ethylene-vinyl acetate copolymer fiber, ethylene-ethyl acrylate copolymer fiber, or the like, polyvinylchloride fiber, polyurethane fiber, polyester fiber, polyester copolymer fiber, polyamide fiber, polyamide copolymer fiber, or the like. Said fibers having a low melting point may be used singly, or two or more kinds of said fiber may be used in combination.

Further, in the present invention, a core-shell type composite fiber, wherein a synthetic resin having a high melting point is used as the core part and a synthetic resin having a low melting point is used as the shell part, or a side by side type composite fiber, wherein fiver having a high melting point and fiber having a low melting point are bonded together, or the like may be used. The fineness of said low melting point fiber is commonly in the range of between 0.1 and 60dtex. Commonly, said low melting point fibers are mixed in with common fibers in an amount of 1 to 50% by mass.

[Polyammonium phosphate]

Polyammonium phosphate used in the present invention is sparingly soluble or insoluble in water. Said polyammonium phosphate has preferably average degree of polymerization in the range between 10 and 40.

Herein said average degree of polymerization is calculated using the following formula.

$$[\text{Formula 1}]$$
$$n = \frac{2 \times P_{mol}}{N_{mol} - P_{mol}}$$

Wherein $P_{mol}$ shows the mole number of phosphorus contained in said polyammonium phosphate, $N_{mol}$ shows the mole number of nitrogen and $P_{mol}$ and $N_{mol}$ are calculated respectively using the following formulae.

$$[\text{Formula 2}]$$
$$P_{mol} = \frac{P \text{ content (\% by mass)}/100}{\text{Atomic weight of P (30.97)}}$$

$$[\text{Formula 3}]$$
$$N_{mol} = \frac{N \text{ content (\% by mass)}/100}{\text{Atomic weight of N (14.01)}}$$

The analysis of the P content is carried out using, for example, an IPC emission spectrochemical analysis, with an analysis of the N content being carried out using, for example, a CHN measurement method.

In a case where the polyammonium phosphate has an average degree of polymerization greater than 10, said polyammonium phosphate is almost insoluble in water, while in a case where polyammonium phosphate has an average degree of polymerization beyond 40, when said polyammonium phosphate is dispersed in water or an aqueous solvent, the viscosity of the resulting dispersion increases remarkably, so that in a case where said dispersion is coated on or impregnated into said fiber sheet, said dispersion is difficult to be uniformly coated or impregnated into said fiber sheet, and as a result it is not guaranteed to provide a fiber sheet having excellent flame retardancy.

[Expandable graphite]

The expandable graphite used in the present invention is produced by soaking a natural graphite in an aminorganic acid such as concentrated sulfuric acid nitric acid, selenic acid or the like, and treating with an oxidizing agent such as perchloric acid, perchlorate, permanguate, bichromate, hydrogen peroxide or the like, and said expandable graphite has a expansion start temperature in the range of between about 200 and 300°C. The expansion volume of said expandable graphite is in the range of between about 30ml/g and 300 ml/g and the particle size of said expandable graphite is in the range of between about 50 $\mu$m and 500 $\mu$m.

[Thermally expandable particles]

In the present invention, thermally expandable particles may be added to said fiber sheet if desired. Said thermally expandable particles consist of a thermoplastic resin having a low softening point, and a solvent having a low boiling point. Said thermoplastic resin having a low softening point may include, a (co)polymer of one or more kinds of monomer, for example, an aliphatic or cyclic acrylate such as methyl acrylate, ethyl acrylate, n-propyl acrylate, iso-propyl acrylate, n-buthyl acrylate, iso-buthyl acrylate, t-buthyl acrylate, 2-ethyl-hexyl acrylate, cyclohexyl acrylate, tetrahydrofurfuryl acrylate, methyl methacrylate, ethyl methacrylate, n-propyl methacrylate, iso-propyl methacrylate, n-buthyl methacrylate, iso-buthyl methacrylate, 2-ethyl hexyl methacrylate, cyclohexyl methacrylate, tetrahydrofurfuryl methacrylate, stearyl methacrylate, lauryl methacrylate, or the like; and/or methacrylate ; a vinyl ether such as methyl vinyl ether, ethyl vinyl ether, n-propyl vinyl ether, n-buthyl vinyl ether, iso-buthyl vinyl ether, or the like ; a styrenic monomer such as styrene, $\alpha$-methyl styrene, or the like ; a nitrile group monomer such as acrylonitrile, methacrylonitrile, or the like ; a halogen aliphatic acid vinyl monomer such as vinyl acetate, propionic acid vinyl, or the like ; a halogen containing vinyl monomer such as vinyl chloride, vinylidene chloride, vinyl fluoride, vinylidene fluoride, or the like ; an olefin group monomer such as ethylene, propylene, or the like ; a diene group monomer such as isoprene, chloroprene, butadiene, or the like ; an $\alpha,\beta$-unsaturated carboxylic acid such as acrylic acid, methacrylic acid, itaconic acid, maleic acid, crotonic acid, atropic acid, citraconic acid, or the like ; a hydroxyl group cotaining monomer such as 2-hydroxy ethyl methacrylate, 2-hydroxy ethyl acrylate, 2-hydroxy propyl methacrylate, 2-hydroxy propyl acrylate, allyl alcohol, or the like ; an amide group vinyl monomer such as acrylic amide, methacrylamide, diaceton acrylic amide, or the like ; an amino group containing vinyl monomer such as dimethylamino ethyl methacrylate, dimethylamino ethyl acrylate, dimethylamino propyl methacrylate, dimethylamino propyl acrylate, or the like ; an epoxy group containing vinyl monomer such as glycidyl acrylate, glycidyl methacrylate, glycidyl allyl ether, or the like ; further, a water soluble vinyl monomer such as vinyl pyrrolidone, vinyl pyridine, or vinyl carbazole or the like ; a hydrolyzable silyl group containing vinyl monomer such as y-methacryloxy propyl tri methoxysilane, vinyl tri acetoxysilane, p-tri methoxy cyril styrene, p-tri ethoxy cyril styrene, p-tri methoxy cyril-$\alpha$-methyl styrene, p-tri ethoxy cyril-$\alpha$-methyl styrene, y-acryloxy propyl tri methoxysilane, vinyl tri methoxysilane, N-$\beta$(N-vinyl benzyl amino ethyl-y-amino propyl) tri methoxysilane, hydrochloride, or the like ; and a crosslinked (co)polymer of said (co)polymer crosslinked with a cross-linking agent such as divinyl benzene, a polyvalent acrylate such as diethyleneglycol diacrylate or the like; metacrylate, diathylphthelate, allyl glycidyl ether, or the like ; a thermoplastic resin having a softening point desirably below 180°C, such as a low softening point polyamid, low softening point polyester, or the like.

Said low boiling point solvent may include organic solvents having a boiling point below 150°C, such as n-hexane, cyclohexane, n-pentane, iso-pentane, n-butane, iso-butane, n-heptane, n-octane, iso-octane, gasoline, ethyether, acetone, benzene, or the like.

Said thermally expandable particles are made of expandable beads, wherein said low boiling point solvent is impregnated into said thermoplastic resin beads, microcapsules, wherein said low boiling point solvent is sealed in a shell of said thermoplastic resin, having a low softening point, or the like. Commonly, said particles have a diameter in the range of between 0.5 and 1000$\mu$m.

Further, thermoexpandable inorganic particles such as vermiculite perlite, shirasu balloon, or the like may be used as said thermally expandable particles of the present invention.

[Synthetic resin binder]

The synthetic resin used as a binder for said fibers includes, for example, thermoplastic synthetic resin such as polyethylene, polypropylene, ethylene-propylene copolymer, ethylene-propylene terpolymer, ethylene-vinyl acetate copolymer, polyvinylchloride, polyvinylidenechloride, polystyrene, polyvinylacetate, fluoric resin, acrylic acid resin, thermoplastic polyester, thermoplastic polyamide, thermoplastic urethane resin, acrylonitrile-butadiene copolymer, styrene-butadiene copolymer, acrylonitrile-butadiene -styrene copolymer, or the like; thermosetting resins such as a urethane resin, melamine resin, heat hardening type acrylic acid resin, urea resins, phenolic resin, epoxy resin, heat hardening type polyester, or the like, and further, a synthetic resin precursor which produces said synthetic resin such as a prepolymer, oligomer monomer, or the like may be used. Said prepolymer, ologomer or monomer may include a urethane resin prepolymer, epoxy resin prepolymer, melamine resin prepolymer, urea resin prepolymer, phenol resin prepolymer, diallyl phthalate prepolymer, acrylic oligomer, polyisocyanate, methacryl ester monomer, diallyphthalated monomer, or the like.

Said synthetic resin binder may be used singly, or two or more kinds of said synthetic resin may be used together, and said synthetic resin binder may be commonly provided as an emulsion, latex, water solution, organic solvent solution, or the like.

In a case where said synthetic resin binder is a water solution, a water soluble resin is preferably dissolved in said water solution. Said water soluble resin may include such as polysodium acrylate, partial saponified polyacrylate, polyvinylalcohol, carboxy methyl cellulose, methyl cellulose, ethyl cellulose, hydroxyl ethyl cellulose, or the like. Further, an alkali soluble resin such as a copolymer of acrylic acid ester and/or methacrylic acid ester, and an acrylic acid and/or methacrylic acid, or a slightly cross-linked copolymer of the above mentioned copolymer, and the like may be used as said water soluble resin of the present invention. Said copolymer or said slightly cross-linked copolymer is commonly provided as an emulsion.

In a case where said water soluble resin is dissolved in said synthetic resin water solution, said water solution may be thickened to improve the stability of dispersion, making it difficult for said expandable graphite sediment, preparing a uniform can be dispersion.

Further, the adhesiveness of said expandable graphite to said fibers may be improved by said water soluble resin, preventing the release of said expandable graphite from said fiber sheet.

Said water soluble resin may be commonly added to said water solution in an amount in the range of between 0.1 and 20% by mass as a solid.

A desirable synthetic resin to be used in this invention is a phenol group resin. Said phenol group resin to be used in this invention is described below.

Said phenol group resin is produced by the condensation reaction between the phenol group compound and form aldehyde and/or a formaldehyde donor.

(Phenol group compound)

The phenolic compound used to produce said phenolic resin may be a monohydric phenol, or polyhydric phenol, or a mixture of monohydric phenol and polyhydric phenol, but in a case where only a monohydric phenol is used, formaldehyde is apt to be emitted when or after said resin composition is cured, making polyphenol or a mixture of monophenol and polyphenol most desirable.

(Monohydric phenol)

The monohydric phenols include alkyl phenols such as o-cresol, m-cresol, p-cresol, ethylphenol, isopropylphenol, xylenol, 3,5-xylenol, butylphenol, t-butylphenol, nonylphenol or the like; monohydric derivatives such as o-fluorophenol, m-fluorophenol, p- fluorophenol, o-chlorophenol, m-chlorophenol, p-chlorophenol, o-bromophenol, m-bromophenol, p-bromophenol, o-iodophenol, m-iodophenol, p-iodophenol, o-aminophenol, m-aminophenol, p-aminophenol, o-nitrophenol, m-nitrophenol, p-nitorophenol, 2,4-dinitorophenol, 2,4,6-trinitorophenol or the like; monohydric phenols of polycyclic aromatic compounds such as naphthol or the like. Each monohydric phenol can be used singly, or as a mixture thereof.

(Polyhydric phenol)

The polyhydric phenols mentioned above, include resorsin, alkylresorsin, pyrogallol, catechol, alkyl catechol, hydroquinone, alkyl hydroquinone, fluoroglrsin, bisphenol, dihydroxynaphthalene or the like. Each polyhydric phenol can be used singly, or as a mixture thereof. Resorsin and alkylresorsin are more suitable than other polyhydric phenols. Alkylresorsin is in particular the most suitable of polyhydric phenols because alkylresorsin can react with aldehydes more rapidly than resorsin.

The alkylresorsins include 5-methyl resorsin, 5-ethyl resorsin, 5-propyl resorsin, 5-n-butyl resorsin, 4,5-dimethyl resorsin, 2,5-dimethyl resorsin, 4,5-diethyl resorsin, 2,5-diethyl resorsin, 4,5-dipropyl resorsin, 2,5-dipropyl resorsin, 4-methyl-5-ethyl resorsin, 2-methyl-5-ethyl resorsin, 2-methyl-5-propyl resorsin, 2,4,5-trimethyl resorsin, 2,4,5-triethyl resorsin, or the like.

A polyhydric phenol mixture produced by the dry distillation of oil shale, which is produced in Estonia, is inexpensive, said polyhydric phenol mixture including 5-metylresorcin, along with many other kinds of alkylresorcin, and is highly reactive, making said polyhydric phenol mixture an especially desirable raw polyphenol material.

[Formaldehyde donors]

In the present invention, said phenolic compound and aldehyde and/or aldehyde donor (aldehydes) are condensed together. Said aldehyde donor refers to a compound or a mixture which emits aldehyde when said compound or said mixture decomposes.

In the present invention, a formaldehyde and formaldehyde donor are denominated together as formaldehyde group compound.

[Production of phenol group resin]

Said phenol group resin has two type, one is a resol type, which is produced by the reaction of said phenol group compound to an excess amount of said formaldehyde group compound using alkaline as a catalyst, and the other novolak type is produced by the reaction of an excess amount of said phenol group compound to said formaldehyde group compound using an acid catalyst, and resol type phenol group resin consists of a mixture of various phenol alcohols which is an additive of phenol group compound and form aldehyde group compound, and said resol type phenol group resin is commonly provided as a water solution, and novolak phenol group resin consists of various dihydroxydiphenylmethane group derivatives, wherein phenol group compounds are further condensed with phenol alcohols, said novolak type phenol group resin being commonly provided as a powder.

In the use of said phenol group resin in the present invention, said phenol group compound is first condensed with a formaldehyde group compound to produce a precondensate, after which the resulting precondensate is applied to said fiber sheet, which is followed by resinification with a curing agent, and/or heating.

To produce said condensate, monohydric phenol may be condensed with a formaldehyde group compound to produce a homoprecondensate, or a mixture of monohydric phenol and polyhydric phenol may be condensed with a formaldehyde group compound to produce a coprecondensate of monohydric phenol and polyhydric phenol. To produce said coprecondensate, either monohydric phenol or polyhydric phenol may be previously condensed with said formaldehyde group compound to produce a precondensate or both of monohydric phenol and polyhydric phenol may be condensed together.

In the present invention, the desirable phenolic resin is phenol-alkylresorcin cocondensation polymer. Said phenol-alkylresorcin cocondensation polymer provides a water solution of said cocondensation polymer(pre-cocondensation polymer) having good stability, and being advantageous in that it can be stored for a longer time at room temperature, compared with a condensate consisting of a phenol only(precondensation polymer). Further, in a case where said sheet material is impregnated with said water solution by precuring, said material has good stability and does not lose its moldability after longtime storage. Further, since alkylresorcin is highly reactive to a form aldehyde group compound, and catches free aldehyde to react with it, the content of free aldehyde in the resin can be reduced.

The desirable method for producing said phenol-alkylresorcin cocondensation polymer is first to create a reaction between phenol and a form aldehyde group compound to produce a phenolic precondensation polymer, and then to add alkylresorcin, and if desired, a form aldehyde group compound, to said phenolic precondensation polymer to create reaction.

In the case of method (a), for the condensation of monohydric phenol and/or polyhydric phenol and a form aldehyde group compound, said form aldehyde group compound (0.2 mole to 3 moles) are added to said monohydric phenol (1mole), after which said form aldehyde group compound (0.1 to 0.8 mole) are added to the polyhydric phenol (1mole) as usual. If necessary, additives may be added to the phenol resins (the precondensation polymers). In said method(s), there is a condensation reaction caused by applying heat at 55°C to 100°C for 8 to 20 hours. The addition of said form aldehyde group compound may be made at once at the beginning of the reaction, or several separate times throughout the reaction, or said form aldehyde group compound may be dropped in continuously throughout said reaction.

Further, if desired, the phenol resins and/or precondensation polymers thereof may be copolycondensed with amino resin monomers such as urea, thiourea, melamine, thiomelamine, dicyandiamine, guanidine, guanamine, acetoguanamine, benzoguanamine, 2,6-diamino-1.3-diamine, or the like.

To produce said phenolic resin, a catalyst or a pH control agent may be mixed before or during or after reaction. Said catalyst or pH control agent is, for example, an organic or inorganic acid such as a hydrochloric acid, sulfuric acid, orthophosphoric acid, boric acid, oxalic acid, formic acid, acetic acid, butyric acid, benzenesulfonic acid, phenolsulfonic acid, p-toluenesulfonic acid, naphthalene-$\alpha$-sulfonic acid, naphthalene-$\beta$-sulfonic acid, or the like; organic acid esters such as an oxalic dimethyl ester, or the like; an acid anhydride such as maleic anhydride, phthalic anhydride, or the like ; an ammonium salt such as an ammonium chloride, ammonium sulfate, ammonium nitrate, ammonium oxalate, ammonium acetate, ammonium phosphate, ammonium thiocyanate, ammonium imide sulfonate, or the like; an organic halide such as monochloroacetic acid or its sodium salt; $\alpha$, $\alpha$'-dichlorohydrin, or the like; a hydrochloride of amines such as triethanolamine hydrochloride, aniline hydrochloride, or the like; a urea adduct such as salicylic acid urea adduct, stearin acid urea adduct, heptanoic acid urea adduct, or the like; an acid substance such as N-trimethyl taurine, zinc shloride, ferric chloride, or the like; ammonia, amines, an alkaline metal or alkaline earth metal of hydroxides such as sodium hydroxide, potassium hydroxide, barium hydroxide, calcium hydroxide, or the like; alkalineearth metal of oxide such as lime, or the like; alkaline substances such as alkalinemetal salts of weak acid such as sodium carbonate, sodium, sulfite, sodium acetate, sodium phosphate or the like, if needed.

Further, curing agents such as a form aldehyde group compound or an alkylol triazone derivative, or the like, may be added to said phenolic precondensation polymer (including precocondensation polymer).

An alkylol triazone derivative is produced by the reaction between the urea group compound, amine group compound, and form aldehyde group compound. Said urea group compound used in the production of said alkylol triazoned derivative may be such as urea, thiourea, an alkylurea such as methylurea, an alkylthiourea such as methylthiourea; phenylurea, naphthylurea, halogenated phenylurea, nitrated alkylurea, or the like, or a mixture of two or more kinds of said urea group compounds. In particular, desirable urea group compound may be urea or thiourea. As amine group compounds, aliphatic amine such as methyl amine, ethylamine, propylamine, isopropylamine, butylamine, amylamine or the like, benzylamine, farfuryl amine, ethanol amine, ethylmediamine, hexamethylene diamine hexamethylene tetramine, and or like, as well as ammonia are illustrated, and said amine group compound is used singly or two or more amine group compounds may be used together.

The form aldehyde group compound(s) used for the production of said alkylol triazone derivative is (are) the same as the form aldehyde group compound used for the production of said phenolic precondensation polymer.

To synthesize said alkylol triazone derivatives, commonly 0.1 to 1.2 moles of said amine group compound(s) and/or ammonia, and 1.5 to 4.0 moles of said form aldehyde group compound are reacted with 1 mole of said urea group compound.

In said reaction, the order in which said compounds are added is arbitrary, but preferably, the required amount of form aldehyde group compound is first put in a reactor, after which the required amount of amine group compound (s) and/or ammonia is (are) gradually added to said form aldehyde group compound, the temperature being kept at below 60°C, after which the required amount of said urea group compound(s) is (are) added to the resulting mixture at 80 to 90°C, for 2 to 3 hours, being agitated so as to react together. Usually, 37% by mass of formalin is used as said form aldehyde group compound, but some of said formalin may be replaced with paraform aldehyde to increase the concentration of the reaction product.

Further, in a case where hexamethylene tetramine is used, the solid content of the reaction product obtained is much higher. The reaction between said urea group compound, said amine group compound and/or ammonia and said form aldehyde group compound is commonly performed in a water solution, but said water may be partially or wholly replaced by one or more kinds of alcohol(s) such as methanol, ethanol, isopropanol, n-butanol, ethylene glycol, diethlene glycol, or the like, and one or more kinds of other water soluble solvent(s) such as a ketone group solvent like acetone, methylethyl ketone, or the like can also be used as solvents.

The amount of said curing agent to be added is, in the case of a form aldehyde group compound, in the range of between 10 and 100 parts by mass to 100 parts by mass of said phenolic precondensation polymer (precocondensation polymer), and in the case of alkylol triazone, 10 to 500 parts by mass to 100 parts by mass of said phenolic precondensation polymer (precocondensation polymer).

[Sulfomethylation and/or sulfimethylation of phenol group resin]

To improve stability of said water soluble phenol group resin, said phenol group resin is preferably sulfomethylated and/or sulfimethylated.

[Sulfomethylation agent]

The sulfomethylation agents used to improve the stability of the aqueous solution of phenol resins, include such as water soluble sulfites prepared by the reaction between sulfurous acid, bisulfurous acid, or metabisulfirous acid, and alkaline metals, trimethyl amine, quaternary ammonium (e.g. benzyltrimethylammonium); and aldehyde additions prepared by the reaction between said water soluble sulfites and aldehydes.

The aldehyde additions are prepared by the addition reaction between aldehydes and water soluble sulfites as mentioned above, wherein the aldehydes include formaldehyde, acetoaldehyde, propionaldehyde, chloral, furfural, glyoxal, n-butylaldehyde, caproaldehyde, allylaldehyde, benzaldehyde, crotonaldehyde, acrolein, phenyl acetoaldehyde, o-tolualdehyde, salicylaldehyde, or the like. For example, hydroxymethane sulfonate, which is one of the aldehyde additions, is prepared by the addition reaction between formaldehyde and sulfite.

[Sulfimethylation agent]

The sulfimethylation agents used to improve the stability of the aqueous solution of phenol resins, include alkaline metal sulfoxylates of an aliphatic or aromatic aldehyde such as sodium formaldehyde sulfoxylate (a.k.a. Rongalit), sodium benzaldehyde sulfoxylate, and the like; hydrosulfites (a.k.a. dithionites) of alkaline metal or alkaline earth metal such as sodium hydrosulfite, magnesium hydrosulfite or the like; and a hydroxyalkanesulfinate such as hydroxymethanesulfinate or the like.

In the case where said phenol group resin precondensate is sulfomethylated and/or sulfimethylated, said sulfomethylation agent and/or sulfimethylation agent is(are) added to said precondensate at any stage to sulfomethylate and/or sulfimethylate said phenol group compound and/or said precondensate.

The addition of said sulfomethylation agent and/or sulfimethylation agent may be carried out at any stage, before, during or after the condensation reaction.

The total amount of said sulfomethylation agent and/or sulfimethylation agent to be added is in the range of between 0.001 and 1.5mols per 1 mol of said phenol group compound. In a case where the total amount of said sulfomethylation agent and/ or sulfimethylation agent to be added is less than 0.001 mol per 1 mol of said phenol group compound, the resulting phenol group resin has an insufficient hydrophilic property, while in a case where the total amount to be added of said sulfomethylation agent and/or sulfimethylation agent is beyond 1.5mols per 1 mol of said phenol group compound, the resulting phenol group resin has insufficient water resistance. To maintain good performance, such as the curing capability of said produced precondensate, and the properties of the resin after curing and the like, the total amount of said sulfomethylation agent and/or sulfimethylation agent is preferably set to be in the range of between about 0.01 and 0.8 mol for said phenol group compound.

Said sulfomethylation agent and/or sulfimethylation agent added to said precondensate, to the sulfomethylation and/or sulfimethylation of said precondensate react(s) with methylol group of said precondensate, and/or the aromatic group of said precondensate, introducing sulfomethyl group and/or sulfimethyl group to said precondensate.

As described above, an aqueous solution of sulfomethylated and/or sulfimethylated phenol group resin precondensate is stable in a wide range, between acidity(PH1.0), and alkalinity, said precondensate being curable in any range, acidity, neutrality, or alkalinity.

In particular, in a case where said precondensate is cured in an acidic range, the remaining amount of said methylol group decrease, and problem of formaldehyde being produced by the decomposition of said cured precondensate is solved.

Into said synthetic resin binder used in the present invention, further, inorganic fillers, such as calcium carbonate, magnesium carbonate, barium sulphate, calcium sulphate, sulfurous acid calcium, calcium phosphate, calcium hydroxide, magnesium hydroxide, aluminium hydroxide, magnesium oxide, titanium oxide, iron oxide, zinc oxide, alumina, silica, diatomaceous earth, dolomite, gypsum, talc, clay, asbestos, mica, calcium silicate, bentonite, white carbon, carbon black, iron powder, aluminum powder, glass powder, stone powder, blast furnace slag, fly ash, cement, zirconia powder, or the like ; natural rubber or its derivative ; synthetic rubber such as styrene-butadiene rubber, acrylonitrile-butadiene rubber, chloroprene rubber, ethylene-propylene rubber, isoprene rubber, isoprene-isobutylene rubber, or the like ; water-soluble macromolecule and natural gum such as polyvinyl alcohol, sodium alginate, starch, starch derivative, glue, gelatin, powdered blood, methyl cellulose, carboxymethylcellulose, hydroxy ethyl cellulose, polyacrylate, polyacrylamide, or the like; organic fillers such as, carbon black, wood flour, walnut powder, coconut shell flour, wheat flour, rice flour, or the like; higher fatty acid such as stearic acid, palmitic acid, or the like; fatty alcohols such as palmityl alcohol, stearyl alcohol, or the like ; fatty acid esters such as butyryl stearate, glycerin mono stearate or the like; fatty acid amide ; natural wax or composition wax such as carnauba wax, or the like; mold release agents such as paraffin, paraffin oil, silicone oil, silicone resin, fluoric resin, polyvinyl alcohol, grease, or the like; organic blowing agents such as azodicarbonamido, dinitroso pentamethylene tetramine, P,P'-oxibis(benzene sulfonylhydrazide), azobis-2,2'-(2-methylglopionitrile), or the like; inorganic blowing agents such as sodium bicarbonate, potassium bicarbonate, ammonium bicarbonate or the like; hollow particles such as shirasu balloon, perlite, glass balloon, foaming glass, hollow ceramics, or the like; foaming bodies or particles such as foaming polyethylene, foaming polystyrene, foaming polypropylene, or the like; a pigment; dye; antioxidant; antistatic agent; crystallizer; flame retardants such as a phosphorus compound, nitrogen compound, sulfur compound, boron compound, bromine compound, guanidine compound, phosphate compound, phosphate ester compound, amino resin, or the like; a flameproof agent; water-repellent agent; oil-repellent agent; insecticide agent; preservative; wax; surfactants; lubricants; antioxidants, ultraviolet stabilizers; plasticizers such as phthalic ester (ex. dibutyl phthalate(DBP), dioctyl phthalate(DOP), dicyclohexyl phthalate) and others(ex. tricresyl phosphate), can be added or mixed.

[Manufacture of said fiber sheet]

Said fiber sheet of the present invention is manufactured by a method wherein a sheet or mat of fiber web is intertwined by needle punching, a method wherein fiber having a low melting point, or a synthetic resin binder is mixed in with or impregnated in to said sheet or mat of said fiber web to bind said fibers together in said sheet or mat by said fiber having a low melting point or said synthetic resin binder, a method wherein said synthetic resin binder is added to a needle punched sheet or mat of said fiber web to bind said fibers together in said sheet or mat, or a method wherein said fibers are knitted or woven.

Said polyammonium phosphate, expandable graphite, or expandable particles is(are) commonly mixed in with said fibers before a sheet or mat is formed using said fibers, or in a case where the synthetic resin binder is impregnated in or coated on to said sheet or mat or the synthetic resin binder is mixed in to said fibers, said polyammonium phosphate, expandable graphite, or expandable particles may be mixed in to said synthetic resin binder. Any mixing ratio can be used in said synthetic resin binder. Any mixing ratio can be applied, but commonly 0.5 to 50% by mass of said polyammonium, phosphate is mixed in with said fibers, and in a case where said expandable graphite is used, 0.5 to 50% by mass of expandable graphite is mixed in with said fibers, and further in a case where said expandable particles are used, 0.1 to 50% by mass of said particles are mixed in with said fibers.

Further, to mix said polyammonium phosphate, expandable graphite, or expandable particles in to said fiber sheet, a dispersion of said polyammonium phosphate, expandable graphite or expandable particles may be coated on or impregnated in to said fiber sheet, after said synthetic resin binder is impregnated in to said fiber sheet wherein said dispersion is prepared by dispersing said polyammonium phosphate, expandable graphite or expandable particles in said synthetic resin binder, aqueous solution of water soluble resin such as polysodium acrylate, partially saponified polyacrylate, polyvinylalchohol, carboxymethiycellulose, methyl cellulose, ethylcellulose, hydroxyl ethylcellulose or the like, or a synthetic resin emulsion such as emulsion of alkali soluble resin such as copolymer of acrylate and/or methacrylate and acrylic acid and/or methacrylic acid or a slightly cross linked copolymer as described above, or the like.

To disperse said polyammonium phosphate, expandable graphite, or expandable particles in said synthetic resin emulsion or aqueous solution, a homomixer, a supersonic wave type emulsifying machine or the like can preferably be used.

In a case where a supersonic type emulsifying machine is used, said polyammonium, expandable graphite, or expandable particles is uniformly dispersed in said aqueous solution or synthetic resin emulsion. In particular, said expandable graphite is powdered by the supersonic effect, and in a case where said synthetic resin emulsion or aqueous solution in which said powdered expandable graphite uniformly dispersed is impregnated in to a fiber sheet, said expandable graphite easily penetrate to the inside of said fiber sheet, improving flame retardancy of said fiber sheet.

After said synthetic resin solution is impregnated or mixed into said fiber sheet, said fiber sheet may be dried. In a case where said synthetic resin binder contained in said fiber sheet is a thermosetting resin, when said thermosetting resin is put in its B-stage, said fiber sheet can be stored for a long time, and moreover, said fiber sheet can be molded at a low temperature, in a short time.

To impregnate said synthetic resin into said fiber sheet, said fiber sheet is usually dipped into a liquid synthetic resin or synthetic resin solution, or said liquid synthetic resin or said synthetic resin solution is coated on to said fiber sheet by spraying, or by using a knife coater, roll coater, flow coater, or the like.

To adjust the synthetic resin content in said fiber sheet into which said synthetic resin is impregnated or mixed, said sheet may be squeezed using a squeezing roll or press machine after said synthetic resin has been impregnated or mixed into said fiber sheet. As a result of said squeezing process, the thickness of said fiber sheet may be reduced but in a case where hollow fibers are contained in said fiber sheet, said fiber sheet has high rigidity, so that the thickness of said fiber sheet may be restored elastically after squeezing, to ensure adequate thickness of said fiber sheet. In particular, in a case where said low melting point fibers are contained in said fiber sheet, it is desirable to heat said fiber sheet and melt said low melting point fibers, so as to bind the fibers with said melted fibers. Thus, the rigidity and strength of said fiber sheet is improved, so that the workability of said fiber sheet during the process of impregnating it with said synthetic resin may be improved, resulting in a remarkable restoration of the thickness of said fiber sheet after squeezing.

As described above, in a case where said hollow fibers are contained in said fiber sheet, said fiber sheet may be rigid, so that the content of said synthetic resin binder in said fiber sheet can be reduced, as compared with said fiber sheet containing no-hollow fibers.

In a case where said synthetic binder is an aqueous synthetic resin emulsion, it is desirable to disperse said expandable graphite into said aqueous synthetic resin emulsion using a stirring device such as a homomixer or the like, or using an ultra sonic effect. In this case, said ultrasonic wave's length is desirably in the range of between 10 and 700 $kH_2$.

When said ultrasonic wave is effected on said aqueous synthetic resin emulsion, said expandable graphite may become very fine, and said very fine graphite can be impregnated into the inside of said fiber sheet.

In a case where said synthetic resin binder is a phenol group resin, and commonly in the case of novolak type phenol group resin, said phenol group resin is mixed in to said fibers as powdery precondensate, after which said fibers in to which said powdery precondensate is mixed are sheeted, and in the case of a precondensate aqueous solution, said precondensate solution is impregnated in or coated on to said fiber sheet.

Commonly, said precondensation polymer is prepared as a water solution, but if desired, a water-soluble organic solvent can also be used in the present invention. Said water-soluble organic solvent may be an alcohol, such as methanol, ethanol, isopropanol, n-propanol, n-butanol, isobutanol, sec-butanol, t-butanol, n-amyl alcohol, isoamyl alcohol, n-hexanol, methylamyl alcohol, 2-ethyl butanol, n-heptanol, n-octanol, trimethylnonylalcohol, cyclohexanol, benzyl alcohol, furfuryl alcohol, tetrahydro furfuryl alcohol, abiethyl alcohol, diacetone alcohol, or the like; ketones such as acetone, methyl acetone, methyl ethyl ketone, methyl-n-propyl ketone, methyl-n-butyl ketone, methyl isobutyl ketone, diethyl ketone, di-n-propyl ketone, diisobutyl ketone, acetonyl acetone, methyl oxido, cyclohexanone, methyl cyclohexanone, acetophenon, camphor, or the like; glycols such as ethylene glycol, diethylene glycol, triethylene glycol, propylene glycol, trimethylene glycol, polyethylene glycol, or the like; glycol ethers such as ethylene glycol mono-methyl ether, ethylene glycol mono-ethyl ether, ethylene glycol isopropyl ether, diethylene glycol mono-methyl ether, triethylene glycol mono-methyl ether, or the like; esters of the above mentioned glycols such as ethylene glycol diacetate, diethylene glycol mono-ethyl ether acetate, or the like, and their derivatives; ether such as 1,4-dioxane, and the like; a diethyl cellosolve, diethyl carbitol, ethyl lactate, isopropyl lactate, diglycol diacetate, dimethyl formamide, or the like.

[Molding of the fiber sheet]

Said fiber sheet of the present invention is molded into a panel shape or prescribed shape, generally by hot-press molding, and in a case where said expandable graphite is mixed in to said fiber sheet, the hot-press molding is carried out at a temperature below expansion start temperature of said expandable graphite. In a case where said thermally expandable particles are contained in said fiber sheet, said thermally expandable particles are heated and expands, restricting the thickness of said fiber sheet. In a case where said thermally expandable particles are heated at a temperature higher than the expansion temperature of said thermally expandable particles, thus restricting the thickness of said fiber sheet, said thermally expandable particles may expand. Since the thickness of said fiber sheet is restricted as described above, said expanding particles may push the fibers surrounding said expanding particles, compressing said fibers, resulting in the density of said fiber sheet becoming higher, improving the rigidity of said fiber sheet. The air space ratio of the whole fiber sheet, however, may not change, so that the weight of said fiber sheet may also remain the same.

Said fiber sheet of the present invention may be hot-pressed into a prescribed shape after said fiber sheet has been hot-pressed into a flat panel, and further, in a case where fibers having a low melting point, or a thermoplastic resin binder is contained in said fiber sheet, said fiber sheet may be heated so as to soften said low melting point fibers or said thermoplastic resin, after which said fiber sheet may be cold-pressed into a prescribed shape. A plural number of said sheets are laminated together upon molding.

Said sheet of the present invention is useful as a base panel for the interior of a car, such as a head lining, a dash silencer, hood silencer, upper engine cover silencer, under engine cover silencer, cylinder head cover silencer, outer dash silencer, a floor mat, dash board, door trim or reinforcement that is laminated on to said base panel, or a sound insulating material, heat insulating material, or building material.

The ventilation resistance of said molded sheet made of said fiber sheet is preferably 0.01 to 100 kPa · s/m, wherein said ventilation resistance R (Pa · s/m) is a barometer expressing the degree of ventilation of said porous material. To measure said ventilation resistance R, a stationary current pressure difference method may be applied. As shown in Fig. 1, a test piece is arranged in a cylindrical duct W, air being put in said duct at a constant flow, as shown by an arrow, to measure the difference in pressure in said duct between inlet side P1, and outlet side P2.

Ventilation resistance is calculated by the following formula.

$$R = \triangle P / V$$

Wherein $\triangle P$ is the difference in the pressure Pa($\triangle P$ = P1 - P2), and V represents air flow volume for said unit cross section area of said duct ($m^3/m^2 \cdot s$). Said ventilation resistance R (Pa · s/m) has the following relationship with the ventilation degree C(m/Pa · s) of

$$C = 1/R$$

Said ventilation resistance can be measured with such as the ventilation tester (Tester Name: KES - F8 - AP1, KATO TECH Co., Ltd. The stationary current pressure difference method).

Said molded fiber sheet, having a ventilation resistance in the range of between 0.01 and 100kPa · s/m, has an excellent sound absorption property.

Other materials such as the surface material, back side material, core material, additional fiber sheet or the like may be laminated onto one or bath sides of said fiber sheet.

Said fiber sheet is bonded to other material using a hot-melt sheet, or a hot-melt adhesive powder or in a case where a synthetic resin binder is coated on to said fiber sheet, said fiber sheet is bonded to said other material using said synthetic resin binder which is impregnated in to said fiber sheet.

Said hot-melt sheet or hot-melt adhesive powder may be a film made of, for example, a polyolefine group resin such as polyethylene, polypropylene, ethylene-vinyl acetate copolymer, ethylene-ethylacrylate copolymer or the like (including a modified polyolefine group resin), a polyurethane, polyester, polyester copolymer, polyamide, polyamide copolymer, or the like, or a mixture of two or more kinds of said resins having (a) low-melting point(s).

In a case where said hot-melt sheet is used to bond said fiber sheet to another material, said hot-melt sheet is extruded from the extruder, after which said extruded hot-melt sheet is laminated on to said flame retardant fiber sheet, then another sheet being laminated on to said fiber sheet, followed by hot-press molding.

Still further to attach said fiber sheet to parts, fastening hardware or said adhesive is used, and in a case where said parts is made of plastic, thermal bonding, high frequency bonding, supersonic bonding or the like are applied to attach said fiber sheet to the parts.

Said laminated sheet is manufactured by such as extrusion molding a thermoplastic resin film using a T-die, and laminating said thermoplastic resin film on a flame retardant fiber sheet, further laminating other fiber sheet on said fiber sheet, then hot-pressing said laminated sheet into a prescribed shape.

For the purpose of ensuring air permeability, said hot melt sheet is preferably porous. To make said hot-melt sheet porous, a lot of fine holes are first made on said hot-melt sheet, or said hot-melt sheet is laminated on to said flame retardant sheet, and then needle punched, or the like, or heated and softened hot-melt sheet which has been extruded from the T die is laminated on to said fiber sheet, after which the layered material is pressed. The resulting film may become porous, having a lot of fine holes. Said holes in said thermoplastic resin film may be formed by the shag on the surface of said fiber sheet. In this method, no process is necessary to form holes in said film, and fine holes may give the product an improved sound absorption property. In a case where said hot-melt adhesive powder is used for adhesion, the resulting molded articles air permeability is ensured.

The ventilation resistance of said molded laminated sheet manufactured by the molding of said laminated sheet is preferably in the range of between 0.01 and 100 kPa · s/m. Said molded laminated sheet has an excellent sound absorption property.

EXAMPLES of the present invention are described below. However, the scope of the present invention should not be limited by only said EXAMPLES.

[EXAMPLE 1]

A fiber sheet having unit weight of 120g/m$^2$ was manufactured by needle punching a fiber mixture containing 80% by mass of polyester fiber (fineness:12.5 dtex, fiber length:55mm), and 20% by mass of polyester fiber having a low melting point (softening point: 110°C, fineness:15dtex, fiber length:50mm). Following this, as a synthetic resin binder a phenol-formaldehyde precondensate(aqueous solution: solid content 45% by mass) was roll coated on and impregnated in to said fiber sheet, the coating amount of said aqueous solution being set to be 30% by mass for said fiber sheet, after which polyammonium phosphate powder(particle size 50 to 75 μm) having an average degree of polymerization of n=10, 30 or 40 was sprinkled on to the back sides of three pieces of said fiber sheet so as to be 20% by mass for each of said sheets, after which said fiber sheets were dried at 130 to 140°C for 3 minutes.

The resulting fiber sheets were precured individually, and at the same time to fix said polyammonium phosphate to the back sides of each of said fiber sheets, manufacturing three kinds of flame retardant fiber sheet.

Each flame retardant fiber sheet was hot-pressed at 200°C for 60 seconds to obtain a molded sheet with a thickness of 3mm.

[COMPARISON 1]

Two kinds of molded fiber sheet with a thickness of 3mm were manufactured using the same method as in EXAMPLE 1, with the exception that two kinds of polyammonium phosphate, having average degree of polymerization of n=5 and 8, were used.

[EXAMPLE 2]

A shoddy web was prepared by opening a regenerated waste fiber containing polyester fiber, cotton or the like using an opening device.

Then, a mixture of 50 parts by mass of novolak type phenol resin powder containing hexamethylenetetramine (particle size: 20~30 μm, melting point: 78~85°C), 50 parts by mass of polyammonium phosphate(particle size: 50~75 μm) with an average degree of polymerization of n =10, 30 or 40, was added to said shoddy web so as to be 30% by mass for each piece of said shoddy web. After that, fleeces were prepared by opening and mixing each piece of said shoddy webs.

Following which flame retardant fiber sheets each having a thickness of 15mm and unit weight of 800 g/m$^2$ were prepared by precuring both sides of each of said fleeces with hot air at 150°C.

Three molded sheets each having a thickness of 5mm were prepared by hot-pressing said flame-retardant fiber sheets at 200°C for 60 seconds.

[COMPARISON 2]

Two kinds of molded sheet having a thickness of 5mm were prepared in the same manner as in EXAMPLE 2, with the exception that polyammmonium phosphate(particle size 50~75 $\mu$m) with an average degree of polymerization of n= 5,8 was used.

[EXAMPLE 3]

A shoddy web was prepared by opening regenerated waste fiber containing polyester fiber, cotton or the like using an opening device.

Then, a mixture of 50 parts by mass of novolak type phenol resin powder containing hexamethylenetetramine (particle size: 20~30 $\mu$m, melting point: 78~85°C), 5 parts by mass of the expandable graphite(particle size: 70~80 $\mu$m, expansion start temperature: 300°C, expansion rate:300ml/g), and 45 parts by mass of polyammmonium, phosphate (particle size:50~75 $\mu$ m) with an average degree of polymerization of n= 10, 30 or 40 was, added to said shoddy web so as to be 30% by mass for each piece of said shoddy web.

Fleeces were then prepared by opening and mixing each of said shoddy webs.

Three flame retardant fiber sheets each having a thickness of 15mm, and unit weight of 600 g/m$^2$ were prepared by precuring both sides of each of said fleeces with hot air at 150°C.

Three molded sheets each having a thickness of 5mm were prepared by hot-pressing said flame retardant fiber sheets at 200°C for 60 seconds.

[COMPARISON 3]

Two kinds of molded sheet having a thickness of 5mm were prepared in the same manner as in EXAMPLE 3 with the exception that polyammonium phosphate (particle size: 50~75 $\mu$ m) with an average polymerization of n =5, 8 was used.

[Flame retardancy test]

Using molded sheets prepared in EXAMPLES 1, 2 and 3 and COMPARISONS 1,2 and 3 as test pieces, wherein said test pieces were untreated, or dipped for 1, 3 and 7 days in the water at 25 $\pm$2°C, and then dried for 48 hours at room temperature of 25$\pm$1°C, a flame retardancy test was carried out. As for the test pieces of Examples 1, 2, and Comparison 1, 2, said flame retardancy tests were carried out according to the FMVSS-302 safety standard for automobile interiors, and as for the test pieces of Example 3 and Comparison 3, said flame retardancy tests were carried out according to the UL94 standard. The results of flame retardancy tests are shown in Table 1.

Table 1

| | the average degree of polymerization n of polyammonium phosphate(a) | untreated | a waterproof test(dipping time in days) | | |
| --- | --- | --- | --- | --- | --- |
| | | | 1 day | 3 days | 7 days |
| Example 1 | 10 | nonflammable | nonflammable | flame-retardancy | slow-burning |
| | 30 | nonflammable | nonflammable | nonflammable | nonflammable |
| | 40 | nonflammable | nonflammable | nonflammable | nonflammable |
| Comparison1 | 5 | flame-retardancy | combustion | combustion | combustion |
| | 8 | nonflammable | flame-retardancy | combustion | combustion |
| Example2 | 10 | nonflammable | nonflammable | nonflammable | flame-retardancy |
| | 30 | nonflammable | nonflammable | nonflammable | nonflammable |
| | 40 | nonflammable | nonflammable | nonflammable | nonflammable |
| Comparison2 | 5 | flame retardancy | combustion | combustion | combustion |
| | 8 | nonflammable | slow-burning | combustion | combustion |

(continued)

| | the average degree of polymerization n of polyammonium phosphate(a) | untreated | a waterproof test(dipping time in days) | | |
| --- | --- | --- | --- | --- | --- |
| | | | 1 day | 3 days | 7 days |
| Example3 | 10 | V-0 | V-0 | V-2 | V-2 |
| | 30 | V-0 | V-0 | V-0 | V-1 |
| | 40 | V-0 | V-0 | V-0 | V-0 |
| Comparison3 | 5 | V-1 | combustion | combustion | combustion |
| | 8 | V-0 | V-2 | combustion | combustion |

Table 1 shows that the molding sheets in EXAMPLES have an excellent waterproof property, while the molded sheets in COMPARISONS using polyammonium phosphate having an average degree of polymerization of n=below 10 have an inferior waterproof property.

[EXAMPLE 4]

A fiber sheets was manufactured by the needle punching method, using 100% by mass of polyester fiber (fiber fineness: 12dtex, fiber length: 60mm). The unit weight of said fiber sheet was 100g/m$^2$.

Following this, as a synthetic resin binder, phenol-alkyresorcin precondensate(aqueous solution: solid content 50% by mass) was roll coated on and impregnated into said fiber sheet, the coating amount being adjusted to be 40% by mass of said fiber sheet.

Further, 30 parts by mass of said synthetic resin binder, 0.5 part of by mass of sodium polyacrylate, 20 parts of by mass of polyammonium phosphate (particle size: 30~40 μm) with an average degree of polymerization of n= 15, and 49.5 parts of by mass of water were uniformly dispersed using a homomixer, to prepare a mixed solution. The viscosity of said mixed solution was 0.3Pa · s.

Said mixed solution was coated on to the back side of said fiber sheet by spraying, adjusting the amount of said mixture being adjusted to be 30% by mass as solid of said fiber sheet, and then dried and precured at 30 to 140°C for one minute, to prepare a flame-retardant fiber sheet.

With said flame retardant fiber sheet as a surface material and a glass wool web on to which 15% by mass of uncured resol type phenol group resin was coated (unit weight: 700g/m$^2$) being used as a base material, the backside said fiber sheet and said glass wool web were lapped together, after which the resulting two layered structure was hot-pressed at 200°C for 60 seconds, to obtain a molded sheet having a thickness of 10mm.

Since the viscosity of said mixed solution was 0.3Pa · s and said mixed solution was uniformly coated by spraying, said molded sheet was judged as nonflammable using a the measurement based on the FMVSS-302 method.

[COMPARISON 4]

A molded fiber sheet having a thickness of 10mm was manufactured in the same manner as in EXAMPLE 4, with the exception that the average degree of the polymerization (n) of polyammonium phosphate in said mixed solution was 50, with the viscosity of said mixed solution being 2.6Pa · s.

Since said mixed solution had an extremely high viscosity, 2.6Pa · s, said mixed solution was coated on to said molded sheet unevently, resulting in molded sheet having an uneven flame retardancy and being judged as slow burning, using a measurement based on theFMVSS-302 method.

The results from EXAMPLE 4 and COMPARISON 4 indicate that when the average degree of polymerization (n) of polyammonium phosphate in the mixed solution is more than 40, the viscosity of said mixed solution increase extremely with coating of said mixed solution becoming uneven, resulting in, the flame retardancy of said molded sheet becoming insufficient.

[EXAMPLE 5]

A mixed solution consisting of 30 parts by mass of a phenol form aldehyde precondensate(aqueous solution:

solid content 50% by mass), 20 parts by mass of polyammonium phosphate(average degree of polymerization of n=15, particle size:60 to 70 $\mu$m), one part by mass of carbon block dispersion(solid content 30% by mass), 0.5 part by mass of an oil and water repellent agent containing flourine(solid content 20% by mass), and 48.5 parts by mass of water was uniformly mixed using a homomixer, and after which said mixed solution was spray coated on to the back side of a nonwoven fabric made of polyester long fibers(unit weight 30g/m$^2$) prepared by the spun bond method so as to be 30% by mass as a solid for said nonwoven fabric, after which the resulting nonwoven fabric was dried in a drying chamber at a temperature in the range of between 140 and 150°C for two minutes, to prepare a flame retardant fiber sheet.

The resulting fiber sheet was used as a surface material, and a glass wool green web (unit weight 600g/m$^2$) on which 15% by mass of uncured resol type phenol group resin was coated was used as a base material, said glass wool green web being laminated to the back side of said flame retardant fiber sheet, after which said laminated sheet was press molded at 200°C for 65 seconds, to prepare a molded sheet with a thickness of 10mm.

The flame retardancy of said molded sheet was graded nonflammable by the FMVSS-302 method, met the safety standards for automobile interiors, said molded sheet having excellent water resistance and weather resistance.

[EXAMPLE 6]

A fiber web consisting of 70% by mass of polyester fiber (fineness: 12 dtex: fiber length: 60mm), and 30% by mass of polyester fiber having a low melting point(softening point: 110°C, fineness: 10detex, fiber length:60mm) was used in this EXAMPLE, and said fiber web was heated to melt said polyester fiber having a low melting point to bind said fibers together using said polyester fiber melt to prepare a fiber sheet(unit weight:400g/m$^2$, thickness:40mm). A mixed solution containing 30parts by mass of said phenol-formaldehyde precondensate(aqueous solution, solid content: 50% by mass), which was used in Example 5, 20 parts by mass of polyammonium phosphate (average polymerization degree: n=15, particle size: 60 to 70 $\mu$m), one part by mass of carbon block dispersion(solid content: 30% by mass), 0.5 part by mass of an oil and water repellent agent containing fluorine(solid content: 20% by mass), and 48.5 parts by mass of water was prepared, after which said fiber sheet was dipped into to said mixed solution to impregnate said mixed solution in to said fiber sheet so as to be 40% by mass of said mixed solution as a solid, following which said fiber sheet was dried in a drying chamber at a temperature in the range between of 100 and 110°C for three minutes by suction to precure said fiber sheet in to which said mixed solution was impregnated, preparing a flame retardant fiber sheet. The resulting fiber sheet was used as a base material, then said flame retardant fiber sheet prepared in EXAMPLE 4 was put on to said fiber sheet as a surface layer, after which said laminated sheet was hot-pressed at 200°C for 60 seconds into a prescribed shape.

The resulting molded sheet was graded nonflammable by the FMVSS-302 method, met the safety standards for automobile interiors, having excellent water resistance and weather resistance.

[EXAMPLE 7]

A shoddy web was prepared by opening regenerated waste fiber containing polyester fiber, cotton or the like by using an opening device. Then a mixture of 50 parts by mass of novolak type phenol resin powder in which hexamethylene tetramine is mixed (particle size:20 to 30 $\mu$m, melting point:78 to 85°C), 45 parts by mass of polyammonium, phosphate with an average degree of polymerization of n= 30 (particle size: 30 to 40 $\mu$m) and 5 parts by mass of expandable graphite(particle size: 70 to 80 $\mu$m, expansion start temperature: 300°C expansion rate:300ml/g) was added to said shoddy web so as to be 30% by mass as a solid, following which said shoddy web was mixed in and further opened to form fleece. After that, said fleece was precured with hot air at 150°C to prepare a flame retardamt fiber sheet having a thickness of 15mm, unit weight 1000g/m$^2$. The resulting flame retardant sheet was then molded by hot-pressing at 200°C, for 60 seconds to prepare a molded sheet having a thickness of 3mm.

The flame retardancy of said molded sheet is V-O in UL 94 standard, and said molded sheet had excellent water resistance, weather resistance and rigidity, being useful as a door trim and for the dashboard of an automobile.

[EXAMPLE8]

A fiber sheet having a unit weight of 80g/m$^2$, and consisting of 80% by mass of polyester fiber (fineness: 10.5dtex, fiber length: 65mm), and 20% by mass of hollow polyester fiber (hollowness rate: 20% fineness 12 dtex, fiber length: 60mm), was prepared by the needle punching method. A mixed solution was prepared by mixing 30 parts by weight of sulfomethylated phenol-alkylresorcin-formaldehyde preconcondensate (aqueous solution: solid content 50% by mass), one part by mass of carbon black dispersion (solid content 30% by mass), 1.5 parts by mass of an oil and water repellent agent containing fluorine (solid content: 20% by mass), and 67.5 parts by mass of water was prepared, following which said fiber sheet was dipped in to said mixed solution to impregnate said mixed solution in to said fiber sheet so as to be 40% by mass as a solid.

Following this, a mixted solution consisting 10 parts by mass of polyamide powder(softening point:130°C, particle size :40 to 50 μm) as a hot-melt adhesive, 20 parts by mass of polyammonium phosphate with an average degree of polymerization of n=40 (particle size 30 to 40 μm), 5 parts by mass of expandable graphite (particle size:70 to 80 μm, expansion start temperature. 300 °C , expansion rate: 150ml/g), and 65 parts by mass of water was prepared , then said mixed solution was coated on to the back of fiber sheet so as to be 25 % by mass as a solid by spraying, then dried at 130 to 140°C for 2 minutes to precure said sheet, while at the same time said hot-melt adhesive and said flame retardant powder were fixed to said fiber sheet, to prepare a surface material which was said flame retardant fiber sheet.

Following this, a pair of the resulting flame retardant fiber sheets as surface material were put on to both sides of a base material, consisting of said flame retardant fiber sheet prepared in EXAMPLE 6, after which the resulting laminated sheet was hot-pressed into a prescribed shape at 210°C for 60 seconds to prepare a molded sheet. The ventilation resistance of the resulting molded sheet was 40.5kPa · s/m, and the flame retardancy was V-O in UL 94 standard. Said molded sheet had an excellent sound absorption property, water resistance weather resistance, being useful as a hood silencer, engine undercover silencer, or the like.

[EXAMPLE 9]

A mixed solution was prepared by mixing 40 parts by mass of sulfimethylated phenol-alkylresorcin-formaldehyde precondensate(aqueous solution : solid content 45% by mass), one part by mass of carbon black dispersion (solid content 30% by mass), two parts by mass of an oil and water repellent agent containing fluorine(solid content 20% by mass), and 57 parts by mass of water, after which a nonwoven fabric made of polyester long fiber (unit weight 50g/m$^2$) and made by the spunbond method was dipped into said mixed solution to impregnate said mixed solution in to said nonwoven fabric so as to be 40% by mass as a solid, following which a dispersion wherein 20 parts by mass of polyammonium phosphate whose average degree of polymerization of n =14 was dispersed in to 80 parts by mass of water, was coated on to the back side of said nonwoven fabric into which said mixed solution was impregnated by spraying so as to be 30 % by mass as a solid, after which it was dried by at 130 to 140 °C for 2 minutes to precure while at the same time said polyammonium phosphate being fixed to said nonwoven fabric, to prepare a flame retardant surface material.

A fiber sheet consisting of 30% by mass of kenaf fiber(fiber length: 60mm), 60% by mass of nylon fiber(fineness: 7dtex, fiber length: 70mm)and 10% by mass of aramid fiber (fineness:15dtex) was prepared by the needle punching method and the unit weight of the resulting fiber sheet was 600g/m$^2$.

An impregnating solution was prepared by mixing 30 parts by mass of phenol-alkylresorcin-formaldehyde precondensate(aqueous solution , solid content 50% by mass), 20 parts by mass of polyammonium phosphate(average polymerization degree: n=14, paticle size: 60 to 70 μm), one part by mass of carbon black dispersion (solid content: 30% by mass), 0.5 part by mass of an oil and water repellent agent containing fluorine(solid content 20% by mass), and 48.5 parts by mass of water. Said fiber sheet was dipped in to the resulting impregnating solution to impregnate said impregnating solution in said fiber sheet so as to be 40% by mass as a solid, after which said fiber sheet in, to which said impregnating solution was impregnated was then dried at 100 to 120°C for 3 minutes in the drying chamber by suction to precure said fiber sheet, and to prepare a flame retardant base material.

A pair of polypropylene films with unit weight of 15g/m$^2$ were each put on both sides of the resulting flame retardant base material as a hot-melt adhesive, following which the backsides of said flame retardant surface materials were put on said polypropylene films. The resulting multilayer sheet was hot-pressed into a prescribed shape at 190°C for 70 seconds to prepare a molded sheet.

The ventilation resistance of the resulting molded sheet was 10.5k Pa · s/m and the flame retardancy of said molded sheet was V-O in UL 94 standard and said molded sheet had an excellent sound absorption property, water resistance, and weather resistance, being useful as an inner or outer dash panel silencer.

[EXAMPLE 10]

A fiber mixture containing 60% by mass of polyester fiber(fineness:12.5dtex, fiber length:55mm), 10% by mass of polyester fiber having a low melting point (softening point:120°C, fineness:15dlex, fiber length:50mm) and 30% by mass of kenaf fiber (fiber length:60mm) was opened by the opening device into a web, after which a mixture of 50 parts by mass of novolak type phenol resin powder containing hexamethylenetetramine (particle size: 20 to 30 μm melting point:78 to 85°C), 30 parts by mass of polyammonium phosphate with an average degree of polymerization of n=20 (particle size 50 to 75 μm), and 20 parts by mass of expandable graphite (particle size:70 to 80 μm, expansion start temperature: 300 °C, expansion rate: 300ml/g) was added to the resulting web so as to be 30% by mass for the unit weight of said web. Said web was then mixed and opened to be fleece, after which both sides of said fleece were precured by hot air at 150°C to prepare a flame retardant fiber sheet with a thickness of 30mm, and a unit weight of 70g/m$^2$.

Following this, said flame retardant surface material used in EXAMPLE 9 was put on the resulting flame retardant fiber sheet, and then the resulting multi layer fiber sheet was hot-pressed at into a prescribed shape at 200°C for 50 seconds to prepare a molded sheet. The ventilation resistance of the resulting molding sheet was 5.5kPa · s/m and the flame retardancy of said molded sheet was V-O in UL 94 standard, and said molded sheet had an excellent sound absorption property, water resistance, and weather resistance, and was useful as an inner or outer dash panel silencer for an automobile.

[EXAMPLE 11]

A fiber sheet made of polyester fiber(fineness : 10.5dtex, fiber length: 65mm) and prepared by the needle punching method, was used as the surface material, the unit weight of said fiber sheet being80g/m$^2$.

A mixed solution was prepared by mixing 30 parts by mass of sulfomethylated phenol-alkylresorcin precocondensate (aqueous solution: solid content 50% by mass), one part by mass of carbon black dispersion (solid content: 30% by mass), 1.5 part by mass of an oil and water repellent agent containing florine, and 67.5 parts by mass of water, after which said fiber sheet was dipped into the resulting mixed solution to impregnate said mixed solution in to said fiber sheet so as to be 40% by mass of solid content.

A mixed solution was prepared by mixing 15 parts by mass of polyester powder (softening point:120°C, particle size: 40 to 50 $\mu$m) as a hot-melt adhesive, 15 parts by mass of polyammonium phosphate with an average degree of polymerization of n=15 (particle size 30 to 40), 5 parts by mass of an acrylic emulsion (solid content 50% by mass), and 60 parts by mass of water, after which the resulting mixed solution was coated onto the backside of said fiber sheet by spraying, so as to be 25% by mass as a solid, following which said fiber sheet on to the back side of which said mixed solution was coated was dried at 130 to 140°C for 2 minutes to precure said fiber sheet and fix said hot-melt adhesive and said flame retardant particles to said fiber sheet, simultaneously thus preparing a surface material. A pair of the resulting surface materials were put on both sides of a polyurethane foam base which was treated with a flame retardant (unit weight: 200g/m$^2$, thickness: 30mm), and the resulting double layer sheet was hot pressed into a prescribed shape at 180°C for 55 seconds to prepare a molded sheet. The ventilation resistance of said molded sheet was 8.5 kPa · s/m and the flame retardancy of said molded sheet was V-O in UL 94 standard, said molded sheet being useful as hood silencer, dash panel inner or outer silencer, with an excellent sound absorption property, water resistance and weather resistance.

[EXAMPLE 12]

A fiber sheet with a unit weight of 80g/m$^2$ was prepared by needle punching a fiber mixture of 70% by mass of polyester fiber (fineness:10.5dtex, fiber length: 65mm), and 30% by mass of hollow polyester fiber (hollowness rate: 20%, fineness:12dtex, fiber length:60mm), and the resulting fiber sheet was used as a surface material.

A mixed solution was prepared by mixing 5 parts by mass of an acrylic resin emulsion (solid content 50% by mass), 20 parts by mass of polyvinyl alcohol(aqueous solution: solid content 10% by mass, saponification degree: 99 mol%), one part by mass of a carbon black dispersion (solid content: 30% by mass), 1.5 by mass of an oil and water repellant agent containing fluorine, 20 parts by mass of a polyammonium phosphate whose average degree of polymerization of n was 20 (particle size 30 to 40 $\mu$m), and 52.5 parts by mass of water, then the resulting mixed solution was coated on to the back side of said fiber sheet by spraying so as to be 30% by mass as a solid.

The resulting fiber sheet on to which said mixed solution was coated was then dried at 130 to 140°C for 2 minutes to prepare a flame retardant fiber sheet to whose surface said polyammonium phosphate was fixed, and the resulting fiber sheet then being used as a flame retardant surface material.

A mixture of 70% by mass of polyester fiber (fineness: 1.5dtex, fiber length: 55mm), and 30% by mass of glass fiber (fiber diameter: 0.01 to 0.06mm, fiber length: 50mm) was opened by an opening device into a web.

A mixture was prepared by mixing 65 parts by mass of a novalac type phenol resin powder in to which hexamethylene tetramine was mixed (particle size: 20 to 30 $\mu$m, melting point:78 to 85°C), 30 parts by mass of a polyammonium phosphate with an average degree polymerization of n =20 (particle size 50 to 75 $\mu$m) and 5 parts by mass of an expandable graphite(particle size :70 to 80 $\mu$m, expansion start temperature: 250°C, expansion rate 300ml/g). The resulting mixture was added to said web so as to be 40% by mass for the unit weight of said web, after which the resulting web to which said mixture was added was opened further and mixed to form fleece. The resulting fleece was then heated by hot air at 200°C to cure said phenol resin in said fleece and prepare a flame retardant fiber sheet as a base material, with a thickness of 50mm, and unit weight 1000g/m$^2$.

The resulting flame retardant fiber sheet base material and said flame retardant surface material were then lapped together. An intermediating polyamide film with a melting point of 100°C and thickness of 0.01mm was used as a hot-melt adhesive, the resulting double layered sheet then being hot pressed at 150°C for two minutes, to be a laminated sheet.

The ventilation resistance of the resulting laminated sheet was 30.5kPa · s/m, with excellent flame retardancy, sound absorption property, water resistance and oil resistance, said laminated sheet also being useful as a sound proof material with a flame retardancy of the type used around the engine of a compressor, and of construction machinery, or for air conditioning units and the like.

[EXAMPLE 13]

A fiber sheet was prepared by needle punching a fiber mixture of 70% by mass of polyester fiber (fineness: 10.5 dtex, fiber length:65mm) and 30% by mass of polyester fiber having a low melting point (softening point:110°C, fineness:12dtex, fiber length:60mm) and the resulting fiber sheet was used as a surface material.

A mixed solution was prepared by mixing 20 parts by mass of polyester powder(softening point:120°C, particle size: 40 to 50 $\mu$m) as a hot melt adhesive, one part by mass of a carbon black dispersion(solid content 30% by mass), 3 parts by mass of an oil and water repellent agent containing fluorine, 20 parts by mass of polyammonium phosphate with polymerization degree of n =20 (particle size: 40 to 50 $\mu$m), and 56 parts by mass of water. The resulting mixed solution was coated onto the back side of said fiber sheet as the surface material by spraying so as to be 30% by mass as a solid, and the resulting fiber sheet onto which said mixed solution was coated was then dried at 130 to 140°C for 2 minutes, to fix said polyammonium phosphate on to the back side of said fiber sheet with said hot-melt adhesive and thus preparing a surface material made of a flame retardant fiber sheet.

A fiber mixture containing 70% by mass of polyester fiber (fineness: 1.5dtex, fiber length: 55mm), 10% by mass of polyester fiber having a low melting point(softening point:110°C, fineness:12dtex, fiber length: 60mm), and 20% by mass of kenaf fiber (fiber diameter: 0.02 to 0.1mm, fiber length: 70mm) was opened by the opening device into a web.

A mixture of 65 parts by mass of a novolak type phenol resin containing hexamethylenetetramine (particle size: 20 to 30 $\mu$m, melting point: 78 to 85°C), 30 parts by mass of polyammonium phosphate with an average polymerization degree of n =40 (particle size: 50 to 75 $\mu$m) and 5 parts by mass of an expandable graphite (particle size:70 to 80 $\mu$m, expansion start temperature: 350°C, expansion rate: 300ml/g) was added to the resulting web so as to be 40% by mass for the unit weight of said web, after which said web was mixed and opened to be fleece. Following this, both sides of the resulting fleece were heated by hot air at 150°C to precure, and thus preparing a flame retardant fiber sheet to be used as a base material, with a thickness of 50mm and unit weight of 1000g/m$^2$.

The resulting flame retardant fiber sheet as a base material and said flame retardant fiber sheet as a surface material were then lapped together, and the resulting double layered fiber sheet was hot pressed into a prescribed shape at 200°C for 70 seconds to prepare a molded fiber sheet. The ventilation resistance of the resulting molded fiber sheet was 18.5 kPa · s/m, and said molded sheet had excellent flame retardancy, sound absorption property, water resistance, oil resistance and weather resistance, being useful as a sound proof material having flame retardancy, used around the engine of a compressor, and of building machinery, or for air conditioning units, and the like.

[EXAMPLE 14]

A fiber sheet containing 30% by mass of glass fiber (fiber diameter:0.01 to 0.05 mm, fiber length:70mm), and 70% by mass of polyester fiber (fineness :10.5dtex, fiber length:65mm) was prepared by the needle punching method. The unit weight of the resulting fiber sheet was 600g/m$^2$.

A mixed solution was prepared by mixing 30 parts by mass of a sulfomethylated phenol-alkylresorcin-formaldehyde precocondensate(aqueous solution, solid content 50% by mass), one part by mass of a carbon black dispersion (solid content: 30% by mass), 1.5 parts by mass of an oil and water repellent agent containing fluorine(solid content:20 % by mass) and 67.5 parts by mass of water.

Said fiber sheet was then dipped into the resulting mixed solution to impregnate said mixed solution into said fiber sheet, the amount to be impregnated being adjusted to be 40% by mass as a solid.

A mixed solution was prepared by mixing 20 parts by mass of polyvinyl alcohol(aqueous solution: 8% by mass of solid content, saponification degree :99mol %), one part by mass of a carbon black dispersion (solid content 30% by mass), 1.5 parts by mass of a oil and water repellant agent containing fluorine(solid content: 20% by mass), 20 parts by mass of a polyammonium phosphate with an average degree of polymerization degree of n =10 (particle size was 30 to 40 $\mu$m), 5 parts by mass of an expandable graphite (particle size: 70 to 80 $\mu$m, expansion start temperature: 350°C, expansion rate: 200ml/g) and 52.5 parts by mass of water. The resulting mixed solution was coated onto the back side of said fiber sheet by spraying, the coating amount being adjusted to be 30% by mass as a solid, following which the resulting fiber sheet onto which said mixed solution was coated was precured by drying at 130 to 140°C for 2 minutes, preparing a flame retardant fiber sheet with a thickness of 15mm. Said flame retardant fiber sheet was then molded into a prescribed shape by hot pressing at 210°C for 50 seconds to prepare a molded sheet. The ventilation resistance of the resulting molded sheet was 10.5 kPa · s/m, and said molded sheet had excellent flame retardancy, sound absorption property, water resistance, oil resistance, and weather resistance, being useful as a sound proof material having flame retardancy to be used around the engine of a compressor, and of building machinery of for air conditioning units, and the like.

[EXAMPLE 15]

Said surface material made of said flame retardant fiber sheet prepared in EXAMPLE 12 was put on the surface of said flame retardant fiber sheet prepared in EXAMPLE 14 so that the back side of said surface material came into contact with the surface of said fiber sheet and the resulting two layers sheet was hot-pressed into a prescribed shape at 210°C for 60 seconds, to prepare a molded sheet. The ventilation resistance of the resulting molded sheet was 12.3kPa · s/m, and said molded sheet had excellent flame retardancy, sound absorption property, water resistance, oil resistance and weather resistance, being useful as a hood silencer, dash silencer, cylinder head cover silencer, and engine under cover silencer of an automobile.

[EXAMPLE 16]

Fiber mixture web containing 80% by mass of polyester fiber(fineness:20dtex, fiber length:55mm) and 20% by mass of core-shell type polyester composite fiber having a low melting point(core: polyester fiber melting point was 260°C, shell: polyester fiber having a low melting point at 120°C, fineness:15dtex, fiber length:50mm) was heated so as to melt said polyester fiber having a low melting point of said core-shell type polyester composite fiber in to said fiber mixture web, and bond said fibers together with the melted polyester fiber, preparing a fiber sheet (unit weight 400g/m$^2$, thickness: 20mm)

A mixed solution was prepared by mixing 30 parts by mass of a sulfomethylated phenol-alkylresorcin- formoldehyde precocondensate (aqueous-solution, solid content: 40% by mass), one part by mass of a carbon black dispersion (solid content: 30 % by mass), 2 parts by mass of an oil and water repellant agent containing fluorine(solid content: 20% by mass), 20 parts by mass of a polyammonium phosphate with an average degree of polymerization of n =25 (particle size: 30 to 40 $\mu$m), and 47 parts by mass of water. The resulting mixed solution was roll coated onto said fiber sheet, the coating amount being adjusted to be 80% by mass as a solid so as to impregnate said mixed solution in to said fiber sheet.

The resulting fiber sheet into which said mixed solution was impregnated was put into a heating chamber to heat and dry at 100 to 110°C for 5 minutes by suction. The resulting flame retardant fiber sheet was then molded by hot-pressing, preparing a molded sheet with a thickness of 10mm.

The ventilation resistance of the resulting molded sheet was 0.02 kPa · s/m, and the flame retardancy of said molded sheet was V-O in UL 94 standard. Said molded sheet had an excellent sound absorption property, water resistance, and weather resistance, being useful as a hood silencer, engine under cover of an automobile.

[EXAMPLE 17]

A fiber web containing, 80 parts by mass of polyester fiber(fineness:2.0 dtex, fiber length: 55mm), 20 parts by mass of a core-shell type polester composite fiber having a low melting point (core: polyester fiber whose melting point was 260°C, shell: polyester fiber having a low melting point whose melting point was 120°C, fineness: 15dtex, fiber length: 50mm) and 60 parts by mass of kenaf fiber(fiber length:55mm) was heated to melt said polyester fiber having a low melting point of said core-shell type polyester composite fiber and bond said fibers together with said melted polyester fiber and thus preparing a fiber sheet(unit weight :600g/m$^2$, thickness :30mm).

A mixed solution was prepared by mixing 30 parts by mass of a sulfomethylated phenol-alkylresorcin-formaldehyde precocondensate (aqueous solution: solid content 40 % by mass), one part by mass of a carbon black dispersion (solid content: 30% by mass), 2 parts by mass of an oil and water repellant agent containing fluorine(solid content: 20% by mass), 20 parts by mass of polyammonium phosphate with an average degree of polymerization of n = 15 (particle size: 20 to 40 $\mu$m), and 47 parts by mass of water. The resulting mixed solution was roll coated onto said fiber sheet to impregnate said mixed solution in said fiber sheet, the amount to be impregnated being adjusted to be 100% by mass as a solid.

The resulting fiber sheet into which said mixed solution was impregnated was put in a drying chamber at 100 to 110°C for 6 minutes by suction to be dried, after which the resulting flame retardant fiber sheet was molded by hot-pressing at 200°C for 70 seconds, to mold a molded sheet with thickness of 10mm. The ventilation resistance of the resulting molded sheet was 0.08kPa · s/m and the flame retardancy of said molded sheet was V-O in UL 94 standard. Said molded sheet had an excellent sound absorption property, water resistance, and weather resistance, being useful as a hood silencer, and engine under cover of an automobile.

[EXAMPLE 18]

A web made of a fiber mixture of 90% by mass of polyester fiber (fineness:1.5dtex, fiber length :55mm) and 10% by mass of a core-shell type composite fiber having a low melting point(core: a polyester fiber whose melting point was 260°C shell: a polyester fiber having a low melting point at 130°C, fineness: 15dtex, fiber length: 50mm) was needle punched to prepare a fiber sheet with a unit weight of 100g/m².

A mixed solution was prepared by mixing 30 parts by mass of a sulfomethylated phenol-alkylresorcin-formaldehyde precocondensate (aqueous solution, solid content: 40% by mass), one part by mass of a carbon black dispersion (solid content: 30 % by mass), 2 parts by mass of an oil and water repellant agent containing fluorine (solid content: 20% by mass) and 67 parts by mass of water.

The resulting mixed solution was roll coated onto said fiber sheet roll to impregnate said mixed solution into said fiber sheet, the coating amount being adjusted to be 20% by mass as solid

A mixed solution was then prepared by mixing 20 parts by mass of a polyammonium phosphate with an average degree of polymerization of n = 15, (particle size was 30 to 40 $\mu$m), 5 parts by mass of an expandable graphite (particle size: 70 to 80 $\mu$m, expansion start temperature: 220 °C, expansion rate: 200ml/g), 15 parts by mass of an acrylic resin emulsion (solid content: 50% by mass) and 60 parts by mass of water.

The resulting mixed solution was coated by spraying on to the back side of said fiber sheet, the coating amount being adjusted to be 40% by mass as a solid, after which said fiber sheet was dried at 120 to 140°C for 5 minutes, to prepare a flame resistant fiber sheet.

A pair of said flame resistant fiber sheets were lapped together on a foamed melamine resin with a thickness adjusted to be 15mm (Trade Name: BASOTECHT BASF JAPAN. LTD.,), and the resulting foamed melamine resin on both sides of which said flame resistant fiber sheets were each lapped was molded by hot-pressing into a prescribed shape at 120 to 140°C for 5 minutes.

The flame retardancy of the resulting molded panel was V-O in UL 94 standard and said molded panel had an excellent sound absorption property, water resistance and weather resistance, being useful as a sound proof material having flame retardancy.

[EXAMPLE 19]

An engine upper cover which was fixed to the upper side of the engine of an automobile was made of a molded flame retardant polyamide. Said flame retardant fiber sheet prepared in EXAMPLE 16 was laminated on to the inside of said engine upper cover by high frequency bonding to produce an engine upper cover silencer having an excellent sound absorption property, sound insulating property, and flame retardancy.

[EXAMPLE 20]

A fiber mixture web of 30% by mass of polyester fiber(fineness:20dtex, fiber length:50mm), 20% by mass of another polyester fiber (fineness:6.0dtex, fiber length: 50mm), 35% by mass of shoddy web prepared by opening regenerated waste fiber using an opening device, and 15% by mass of core-shell type composite polyester fiber having a low melting point(melting point:110°C, fineness: 10dtex, fiber length:30mm) was prepared, after which said fiber mixture web was heated at 120 to 130°C to melt said composite polyester fiber having a low melting point and bind fibers together by the resulting melted fiber, preparing a fiber sheet(unit weight :400g/m², thickness:20mm).

A mixed solution was then prepared by mixing 40 parts by mass of a sulfomethylated phenol-alkyl resorcin-formaldehyde precocondensate(aqueous solution solid content:50% by mass), one part by mass of a carbon black dispersion(solid content:30% by mass), 3 parts by mass of an oil and water repellent agent (solid content: 20% by mass) and 56 parts by mass of water.

The resulting mixed solution was coated and impregnated into said fiber sheet, the coating amount being adjusted to be 30% by mass.

A flame retardant mixed solution containing a hot-melt adhesive was prepared by mixing 15 parts by mass of polyammonium phosphate with an average degree of polymerization of n =20 (particle size: 20 to 40 $\mu$m), 15 parts by mass of an expandable graphite(particle size:70 to 80 $\mu$m, expansion start temperature:250°C, expansion rate:200ml/g), 10 parts by mass of an acrylic emulsion (solid content : 50% by mass), 5 parts by mass of a polyamide powder (softening point:120°C, particle size: 40 to 50 $\mu$m) as a hot-melt adhesive, and 55 parts by mass of water.

Said flame retardant mixed solution was coated onto the backside of said fiber sheet by spraying, the coating amount being adjusted to be 200g/m² as a solid. The resulting fiber sheet onto which said flame retardant mixed solution was coated was than dried at 130 to 140°C for 5 minutes by suction to prepare a flame retardant fiber sheet. Further, a pair of the resulting flame retardant fiber sheets were lapped together so that their backsides came into contact with each other, the resulting two layer structure then being hot-pressed into a prescribed shape at 200°C for 90 seconds to prepare a molded sheet.

The ventilation resistance of the resulting molded sheet was 5 to 20 kPa · /m, and the flame retardancy of said molded sheet was V-O in UL 94 standard, and said molded sheet had an excellent sound absorbing property, water resistance, and weather resistance.

[EXAMPLE 21]

A molded sheet was prepared in the same manner as in EXAMPLE 20 with exception excepting that a sheet consisting of a fiber mixture of 75% by mass of kenaf fiber(fiber diameter:0.01 to 0.07mm, fiber length:55mm), 10% by mass of shoddy web prepared by opening regenerated waste fiber with an opening device, and 15% by mass of a core-shell type composite polyester fiber having a low melting point (melting point:110°C, faneness:10dtex, fiber length:30mm) was used. The ventilation resistance of the resulting molded sheet was 5 to 15kPa · s/m, and the flame retardancy of said molded sheet was V-O in UL 94 standard. Said molded sheet had a slight themoshrinkage property, an excellent dimensional stability, sound absorbing property water and weather resistance.

POSSIBILITY OF INDUSTRIAL USE

Said fiber sheet of the present invention is highly flame resistant, inexpensive, and harmless, so that said fiber sheet is useful for automobile or building interiors, and the like.

**Claims**

1. A flame retardant fiber sheet containing a polyammonium phosphate having an average degree of polymerization in the range of between 10 and 40.

2. A flame retardant fiber sheet containing a polyammonium phosphate having an average degree of polymerization in the range of between 10 and 40, and an expandable graphite.

3. A flame retardant fiber sheet in accordance with Claim 1 or 2, wherein fiber having a melting point of below 180°C is mixed.

4. A flame retardant fiber sheet in accordance with any of Claims 1 to 3, wherein said fiber is bound or intertwined by a synthetic resin binder and/or needling.

5. A flame retardant fiber sheet in accordance with Claim 4, wherein said synthetic resin binder is powder or aqueous solution, and in a case where said synthetic resin binder is aqueous solution, said polyammonium phosphate whose average degree of polymerization is in the range of between 10 and 40, or said polyammonium phosphate and said expandable graphite are dispersed in said aqueous solution, with the resulting dispersion being impregnated in or coated on to said fiber sheet.

6. A flame retardant resistant fiber sheet in accordance with Claim 5, wherein a water soluble resin is dissolved in said aqueous solution.

7. A flame retardant fiber sheet in accordance with any of Claims 4 to 6, wherein said synthetic resin binder is a phenol group resin.

8. A flame retardant fiber sheet in accordance with Claim 7, wherein said phenol group resin is sulfomethylated and/or sulfimethylated.

9. A molded fiber sheet in accordance with any of Claims 1 to 8, wherein said flame retardant fiber sheet is molded into a prescribed shape.

10. A molded fiber sheet in accordance with Claim 9, wherein the ventilation resistance of said molded sheet is in the range of between 0.01 and 100 kPa · s/m.

Fig. 1

<div align="center">

**INTERNATIONAL SEARCH REPORT**

</div>

| | International application No. |
|---|---|
| | PCT/JP2005/023941 |

| A. CLASSIFICATION OF SUBJECT MATTER |
|---|
| *D06M11/72*(2006.01), *D04H1/54*(2006.01), *D06M11/73*(2006.01), *D06M15/41* (2006.01) |

According to International Patent Classification (IPC) or to both national classification and IPC

| B. FIELDS SEARCHED |
|---|
| Minimum documentation searched (classification system followed by classification symbols) <br> D06M11/00-11/84, D04H1/00-18/00, D06M13/00-15/72, C09K21/00-21/14 |

Documentation searched other than minimum documentation to the extent that such documents are included in the fields searched
<br>   Jitsuyo Shinan Koho          1922-1996   Jitsuyo Shinan Toroku Koho   1996-2006
<br>   Kokai Jitsuyo Shinan Koho    1971-2006   Toroku Jitsuyo Shinan Koho   1994-2006

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 53-48396 A  (Marubishi Yuka Kogyo Kabushiki Kaisha), <br> 01 May, 1978 (01.05.78), <br> Claims 1, 2; page 1, right column, lines 10 to 14 <br> (Family: none) | 1-10 |
| Y | JP 50-22050 A  (Sumitomo Chemical Co., Ltd.), <br> 08 March, 1975 (08.03.75), <br> Claim 1; page 2, lower left column, lines 4 to 11 <br> (Family: none) | 1-10 |
| Y | JP 8-90702 A  (Teijin Ltd.), <br> 09 April, 1996 (09.04.96), <br> Claim 1; Par. No. [0016] <br> (Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search <br>   13 March, 2006 (13.03.06) | Date of mailing of the international search report <br>   11 April, 2006 (11.04.06) |
|---|---|
| Name and mailing address of the ISA/ <br>   Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2005/023941 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-329428 A  (Kuraray Co., Ltd.),<br>27 November, 2001 (27.11.01),<br>Claim 1; example 3<br>(Family: none) | 2-10 |
| Y | JP 2000-309772 A  (Nagoya Oilchemical Co., Ltd.),<br>07 November, 2000 (07.11.00),<br>Par. Nos. [0038] to [0040]<br>(Family: none) | 3-8,10 |
| P,X | JP 2005-290363 A  (Nagoya Oilchemical Co., Ltd.),<br>20 October, 2005 (20.10.05),<br>Claims 1 to 6; Par. Nos. [0002], [0009], [0037], [0042]; examples 1 to 10<br>(Family: none) | 1-10 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002348766 A
- JP 10226952 A
- JP 10168756 A